# EUROPÄISCHE PATENTSCHRIFT

(11) **EP 3 204 543 B1**
(45) Veröffentlichungstag und Bekanntmachung des Hinweises auf die Patenterteilung: **17.07.2019**
(21) Anmeldenummer: 15790979.7
(22) Anmeldetag: 09.11.2015
(51) Int. Cl.: D03D 1/00, B60R 22/14

(54) **GURTBAND FÜR EINE SICHERHEITSGURTEINRICHTUNG UND SICHERHEITSGURTEINRICHTUNG**
BELT STRAP FOR SAFETY BELT DEVICE AND SAFETY BELT DEVICE
SANGLE DE CEINTURE POUR SYSTÈME DE CEINTURE DE SÉCURITÉ ET SYSTÈME DE CEINTURE DE SÉCURITÉ

(43) Veröffentlichungstag der Anmeldung: 16.08.2017
(73) Patentinhaber: Autoliv Development AB, 447 83 Vårgårda (SE)
(72) Erfinder: VAN HELVOORT, Chris, NL-5282 XE Boxtel (NL); VAN NEER, Richard, NL-5216 JL den Bosch (NL); WELZ, Willi, NL-5464 PB Veghel (NL); MUELLER, Kai-Stephan, 25524 Oelixdorf (DE)
(74) Vertreter: Müller Verweyen
(86) Internationale Anmeldenummer: PCT/EP2015/076029
(87) Internationale Veröffentlichungsnummer: WO 2016/071528

(56) Entgegenhaltungen:
- DE-A1- 2 364 982
- DE-A1- 3 119 177
- DE-A1- 3 328 738
- DE-A1- 10 046 268
- JP-U- S61 111 860
- US-A- 4 400 013

## Beschreibung

Die Erfindung betrifft ein Gurtband für eine Sicherheitsgurteinrichtung mit den Merkmalen des Oberbegriffs von Anspruch 1 und eine Sicherheitsgurteinrichtung mit den Merkmalen des Oberbegriffs von Anspruch 15.

Eine gattungsbildende Sicherheitsgurteinrichtung ist aus DE 2 364 982 A1 bekannt.

Sicherheitsgurteinrichtungen und die darin vorgesehenen Gurtbänder dienen im Allgemeinen dazu, die Insassen in Kraftfahrzeugen im Unfall zurückzuhalten, um das Verletzungsrisiko der Insassen zu verringern.

Dabei ist eines der wichtigen Kriterien für die Insassenbelastung im Rückhaltefall die sogenannte Brusteindrückung des Insassen durch den die Brust des Insassen kreuzenden Diagonalgurtabschnitt. Die Brusteindrückung ergibt sich ursächlich aus dem Zusammenhang der Anlagefläche des Diagonalgurtabschnittes und der von dem Diagonalgurtabschnitt ausgeübten Rückhaltekraft, welche wiederum von dem Insassentyp und der Unfallschwere abhängt. Damit ist der wesentliche Parameter zur Verminderung der Brusteindrückung die Anlagefläche des Diagonalgurtabschnittes.

Da das Gurtband auf einem Gurtaufroller der Sicherheitsgurteinrichtung aufwickelbar sein muss, dessen Wickelbreite aus Packagegründen nicht beliebig breit gewählt werden kann, kann auch die Auflagefläche nur begrenzt vergrößert werden. Um diesem Nachteil zu begegnen, wurden bereits aufblasbare Gurtbänder verwendet, welche doppellagig ausgeführt sind und mittels eines Gasgenerators in einer Frühphase des Unfalles zu einer dicken "Wurst" mit einer vergrößerten Anlagefläche aufgeblasen werden können.

Nachteilig bei dieser Lösung ist es, dass die Kosten der Sicherheitsgurteinrichtung durch den vorzusehenden Gasgenerator steigen, und außerdem der erforderliche Bauraumbedarf zur Befestigung der Sicherheitsgurteinrichtung erheblich vergrößert wird.

Vor diesem Hintergrund liegt der Erfindung die Aufgabe zugrunde, ein Gurtband und eine Sicherheitsgurteinrichtung bereitzustellen, mit dem bzw. mit der die Insassenbelastung unter Vermeidung der oben genannten Nachteile mit einfachen Mitteln verringert werden kann.

Zur Lösung der Aufgabe wird erfindungsgemäß ein Gurtband mit den Merkmalen des Anspruchs 1 und eine Sicherheitsgurteinrichtung mit den Merkmalen des Anspruchs 15 vorgeschlagen. Weitere bevorzugte Weiterentwicklungen sind den Unteransprüchen, der Beschreibung und den zugehörigen Figuren zu entnehmen.

Gemäß dem Grundgedanken der Erfindung wird vorgeschlagen, dass das Gurtband in einem ersten Abschnitt in Bezug zu seiner Längsrichtung breiter als in einem zweiten Abschnitt ausgebildet ist.

Durch die vorgeschlagene Lösung kann die Insassenbelastung allein durch die Formgebung des Gurtbandes mit sehr einfachen Mitteln verringert werden, ohne dass zusätzliche Bauteile, wie z.B. ein Gasgenerator, vorgesehen werden müssen, oder das Gurtband zum Aufblasen besonders gewebt werden muss. Die Position des breiteren ersten Abschnitts ist dabei bewusst so gewählt, dass dieser Abschnitt bei angelegtem Gurtband an dem Teil des Insassen zur Anlage gelangt, bei dem die Insassenbelastung gesenkt werden soll.

Ferner ergibt sich eine sehr homogene Lastverteilung, da das Gurtband in einem zwischen dem zweiten und dem ersten Abschnitt angeordneten Übergangsabschnitt 6 bis 18 Schussfäden/cm mit einer in Richtung des ersten Abschnittes zunehmenden Anzahl von Schussfäden/ cm aufweist.

Ferner wird zur Lösung der Aufgabe eine Sicherheitsgurteinrichtung mit den Merkmalen des Oberbegriffs von Anspruch vorgeschlagen, bei der nach dem Grundgedanken der Erfindung ein Gurtband nach einem der Ansprüche 1 bis 14 vorgesehen ist, und bei dem ein zweiter Gurtaufroller vorgesehen ist, auf dem das Gurtband mit einem zweiten Ende aufwickelbar ist.

Durch die vorgeschlagene Lösung kann die Insassenbelastung des Teils des Insassen verringert werden, an dem der erste Abschnitt des Gurtbandes zur Anlage gelangt, wobei es durch das Vorsehen des zweiten Gurtaufrollers ermöglicht wird, dass das Gurtband ausschließlich mit dem zweiten schmaleren Abschnitt vollständig aufgewickelt wird.

Der zweite Abschnitt weist bevorzugt eine Breite von 46 bis 48 mm auf, wie sie bei herkömmlichen Sicherheitsgurteinrichtungen üblich ist. Damit kann das Gurtband mit dem zweiten Abschnitt mit einem herkömmlichen Gurtaufroller aufgewickelt werden. Sofern zwei Gurtaufroller verwendet werden, ist es ferner möglich, den ersten Abschnitt so zu positionieren, dass dieser für ein vollständiges Aufwickeln des Gurtbandes nicht auf einem der Gurtaufroller aufgewickelt werden muss, so dass das Gurtband trotz der größeren Breite des ersten Abschnittes immer vollständig aufgewickelt werden kann, und insbesondere in der Parkposition mit einer möglichst geringen Lose an der Fahrzeugstruktur herunterhängt.

Besonders gute Ergebnisse hinsichtlich der Verringerung der Insassenbelastung bei einem gleichzeitig guten Tragekomfort konnten erzielt werden, indem der erste Abschnitt eine Breite von 75 bis 100 mm aufweist, wobei der erste Abschnitt bevorzugt außerdem eine Länge von 350 bis 600 mm aufweisen sollte. Ferner kann das Gurtband in dem ersten Abschnitt bevorzugt eine 1/1 und/oder eine 2/2 Bindung aufweisen, wodurch das Gurtband in dem breiten Anlageabschnitt des ersten Abschnittes eine sehr hohe Dichte von Verbindungspunkten zwischen den Kettfäden und den Schussfäden aufweist. Dadurch kann eine sehr gleichmäßige Lastverteilung in dem Gurtband verwirklicht werden.

Insbesondere kann eine sehr gute Lastverteilung verwirklicht werden, indem das Gurtband in dem ersten Abschnitt 10 bis 18 Schussfäden/cm aufweist.

Weiter wird vorgeschlagen, dass das Gurtband zwischen dem zweiten und dem ersten Abschnitt einen Übergangsabschnitt mit einer in Richtung des ersten Abschnittes zunehmenden Breite aufweist, welcher eine Länge von 100 bis 200 mm aufweist. Durch den vorgeschlagenen Übergangsbereich und dessen Bemessung kann die Lastverteilung in dem Gurtband und an dem zurückgehaltenen Insassen vergleichmäßigt werden, so dass die Reduzierung der Insassenbelastung durch den ersten Abschnitt nicht zu einem sprungartigen Anstieg der Insassenbelastung im Übergang zu dem zweiten Abschnitt führt. Weiter wird vorgeschlagen, dass das Gurtband in dem ersten Abschnitt in zwei übereinander angeordneten Lagen gewebt ist, und die beiden Lagen durch einen Bindungsfaden miteinander verbunden sind. Durch die vorgeschlagene Lösung kann ein sehr gleichmäßiges Erscheinungsbild ohne sichtbare Löcher erzielt werden. Außerdem kann dadurch der Tendenz eines Faltenwurfes oder Wölbens des Gurtbandes im Bereich des ersten Abschnitts entgegengewirkt werden.

Ferner kann das Gurtband hinsichtlich der zu vermeidenden Tendenz zu einem Faltenwurf oder Wölbens besonders einfach ausgelegt werden, indem die Kettfäden des Gurtbandes in wenigstens 3, vorzugsweise in 4 Webbäumen gewebt sind. Durch das Verweben der Kettfäden in unterschiedlichen Webbäumen, kann das Gurtband in den verschiedenen Zonen mit bestimmten Eigenschaften versehen werden, welche dem Gurtband in Querrichtung bestimmte Eigenschaften, wie z.B. eine erhöhte Steifigkeit, verleihen.

Dabei kann einer Tendenz des Wölbens oder Faltenwurfes besonders effizient entgegengewirkt werden, wenn das Gurtband in einem zentralen ersten Webbaum mit einer ersten Anzahl an Kettfäden, und in den an den zentralen ersten Webbaum angrenzenden zweiten und dritten Webbäumen mit einer zweiten Anzahl von Kettfäden gewebt ist, welche kleiner als die erste Anzahl der Kettfäden in dem ersten Webbaum ist.

Weiter wird vorgeschlagen, dass die zweiten und dritten Webbäume identisch ausgebildet und symmetrisch zu dem zentralen ersten Webbaum angeordnet sind, wodurch das Gurtband beidseitig des zentralen Abschnittes identische Eigenschaften aufweist. Dadurch gibt es keine bevorzugte Seite, welche dazu tendiert, sich unter Last zu verwölben oder in Falten zu legen. Ferner weist das Gurtband an beiden Seiten dieselben Eigenschaften auf, so dass das Gurtband auch verdreht an dem Insassen anliegen kann, ohne dass sich dadurch die Rückhaltecharakteristik ändert.

Besonders gute Ergebnisse konnten mit einem Gurtband erzielt werden, welches in dem ersten zentralen Webbaum 100 bis 140, vorzugsweise 120 Kettfäden und/oder in den zweiten und dritten Webbäumen 70 bis 80, vorzugsweise 75 Kettfäden aufweist.

Weiter wird vorgeschlagen, dass der Bindungsfaden in einem von den anderen Kettfäden getrennten Webbaum gewebt ist, wodurch der Bindungsfaden bewusst mit einer anderen Bindung als die übrigen Kettfäden mit den Schussfäden verwoben werden können. Insbesondere ist es dadurch sehr einfach möglich, die beiden Lagen des Gurtbandes miteinander zu verbinden.

Insbesondere kann auf dem Gurtband eine verschieblich geführte, in einem fahrzeugfest befestigbaren Gurtschloss verriegelbare Gurtzunge vorgesehen sein, welche das Gurtband in einer verriegelten Stellung in einen die Brust eines Insassen kreuzenden Diagonalgurtabschnitt und einen das Becken des Insassen kreuzenden Beckengurtabschnitt unterteilt, und der erste Abschnitt so bemessen und positioniert sein, dass er den Diagonalgurtabschnitt oder einen Teil des Diagonalgurtabschnittes bildet. Durch die vorgeschlagene Lösung kann insbesondere die Brusteindrückung durch den Diagonalgurtabschnitt vermindert werden. Da das Becken des Insassen eine erheblich größere Belastung verträgt, ist es aus Gründen des Verletzungsrisikos vertretbar, das Gurtband hier mit einer herkömmlichen Breite auszuführen, der Beckengurtabschnitt ist demnach durch den zweiten schmaleren Abschnitt des Gurtbandes gebildet und kann auf dem zweiten Gurtaufroller oder dem ersten Gurtaufroller aufgewickelt werden.

Die Erfindung wird im Folgenden anhand bevorzugter Ausführungsformen unter Bezugnahme auf die beigefügten Figuren erläutert. Dabei zeigt:
- Fig. 1:: eine Sicherheitsgurteinrichtung mit einem erfindungsgemäßen Gurtband;
- Fig. 2:: das Gurtband mit dem ersten verbreiterten Abschnitt in verschiedenen Ansichten; und
- Fig. 3:: zwei verschiedene Schnittdarstellungen parallel zur Längserstreckung durch die Schussfäden des ersten Abschnittes des Gurtbandes.

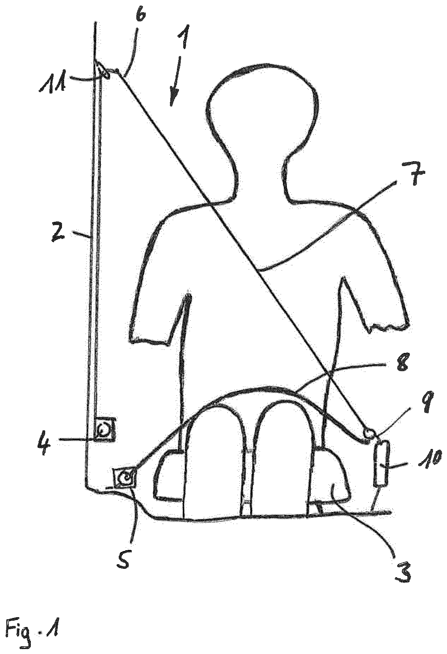

In der Fig. 1 ist eine erfindungsgemäße Sicherheitsgurteinrichtung 1 mit einem auf einem Fahrzeugsitz 3 sitzenden Insassen zu erkennen. Die Sicherheitsgurteinrichtung 1 umfasst einen ersten Gurtaufroller 4 und einen Umlenker 11, welche beide an einer B-Säule 2 eines Fahrzeuges befestigt sind. Ferner umfasst die Sicherheitsgurteinrichtung 1 einen zweiten Gurtaufroller 5 und ein Gurtschloss 10, welche beide an einem unteren Abschnitt der Fahrzeugstruktur, bevorzugt an der Bodenstruktur des Fahrzeuges befestigt sind. Darüber hinaus ist ein Gurtband 6 vorgesehen, auf dem eine Gurtzunge 9 verschiebbar geführt ist, welche in dem Gurtschloss 10 verriegelbar ist. Die Gurtzunge 9 unterteilt das Gurtband 6 in der verriegelten Stellung in einen die Brust des Insassen kreuzenden Diagonalgurtabschnitt 7 und einen das Becken des Insassen kreuzenden Beckengurtabschnitt 8.

Das Gurtband 6 ist mit einem ersten Ende auf dem ersten Gurtaufroller 4 aufwickelbar und verläuft von dort aus nach oben zu dem Umlenker 11. Ausgehend von dem Umlenker 11 verläuft das Gurtband 6 weiter in dem Diagonalgurtabschnitt 7 bis zu der in dem Gurtschloss 10 verriegelten Gurtzunge 9 und weiter von der Gurtzunge 9 in dem Beckengurtabschnitt 8 zu dem zweiten Gurtaufroller 5, auf dem das Gurtband 6 mit einem zweiten Ende aufwickelbar ist. Soweit entspricht die Sicherheitsgurteinrichtung 1 der Geometrie einer herkömmlichen 3-Punkt-Sicherheitsgurteinrichtung mit zwei Gurtaufrollern 4 und 5.

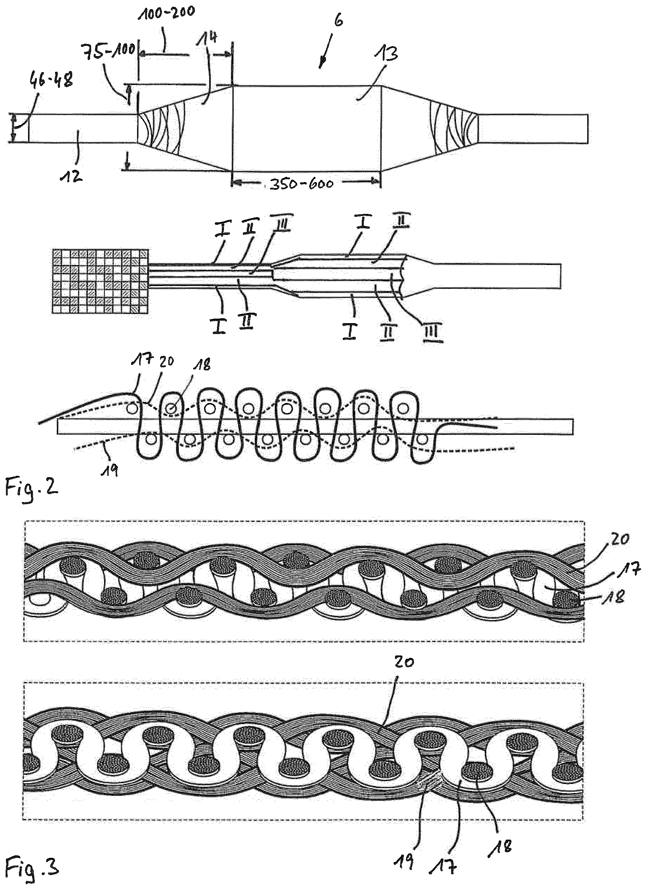

In der Fig. 2 ist ein Ausschnitt des Gurtbandes 6, vorzugsweise ein Ausschnitt des Diagonalgurtabschnittes 7, vergrößert zu erkennen. Das Gurtband 6 weist wenigstens einen ersten Abschnitt 13, einen zweiten Abschnitt 12 und jeweils einen zwischen den beiden Abschnitten 12 und 13 angeordneten Übergangsabschnitt 14 auf. Die zweiten Abschnitte 12 weisen eine Breite von 46 bis 48 mm auf, welche der Breite herkömmlicher Sicherheitsgurte entspricht. Da das Gurtband 6 jeweils mit dem ersten Ende und dem zweiten Ende auf den beiden Gurtaufrollern 4 und 5 aufwickelbar ist, welche den zweiten Abschnitten 12 des Gurtbandes 6 entsprechen, können ebenfalls herkömmliche Gurtaufroller 4 und 5 mit den üblichen Abmessungen und Einbaumaßen verwendet werden. Der erste Abschnitt 13 des Gurtbandes weist hingegen eine Breite von 75 bis 100 mm auf und ist 350 bis 600 mm lang. Ferner ist zwischen dem ersten Abschnitt 13 und den zweiten Abschnitten 12 jeweils ein Übergangsabschnitt 14 vorgesehen, in dem die Breite des Gurtbandes 6 in Richtung des ersten Abschnittes 13 zunimmt. Die Übergangsabschnitte 14 weisen jeweils eine bevorzugte Länge von 100 bis 200 mm auf. Der erste Abschnitt 13 ist so in dem Gurtband 6 positioniert, dass er bei angeschnalltem Gurtband 6 auf der Brust des Insassen zu liegen kommt. Ferner ist der erste Abschnitt 13 so positioniert bzw. die zweiten Abschnitte 12 sind in der Länge so bemessen, dass das Gurtband 6 beim Abschnallen zu einem vollständigen Aufwickeln ausschließlich mit den zweiten Abschnitten 12 mit der geringeren Breite auf den beiden Gurtaufrollern 4 und 5 aufgerollt wird. Dabei ist die Länge der zweiten Abschnitte 12 so bemessen, dass das Gurtband 6 über den ersten Gurtaufroller 4 maximal soweit aufgewickelt wird, bis es mit einem Übergangsabschnitt 14 oder dem ersten Abschnitt 13 an dem Umlenker 11 anliegt. Die restliche Gurtlose wird dadurch aufgewickelt, indem das zweite Ende des Gurtbandes 6 auf dem zweiten Gurtaufroller 5 aufgewickelt wird. Damit wird das Gurtband 6 praktisch über die beiden freien Enden des Diagonalgurtabschnittes 7 und des Beckengurtabschnittes 8 aufgewickelt.

Der Vorteil der vorgeschlagenen Lösung ist darin zu sehen, dass die Anlagefläche des Gurtbandes 6 in dem Bereich der Anlage des ersten Abschnittes 13 an dem Insassen vergrößert und die Insassenbelastung dadurch reduziert wird. Dabei ist es insbesondere von Vorteil, dass das Gurtband 6 in den beiden aufzuwickelnden zweiten Abschnitten 12 bzw. den zwei Enden mit herkömmlichen Abmaßen ausgelegt ist, so dass herkömmliche Gurtaufroller 4 und 5 verwendet werden können, und dass das Gurtband 6 zu einem vollständigem Aufwickeln nicht mit den ersten Abschnitten 13 aufgewickelt werden muss. Die Position des ersten Abschnittes 13 muss dabei so ausgelegt werden, dass er sowohl in der Parkposition bei abgeschnalltem Gurtband 6 als auch bei angelegtem Gurtband 6 immer zwischen dem Umlenker 11 und der Gurtzunge 9 zu liegen kommt, ohne dass die Gurtbandauszugsbewegung und Gurtbandeinzugsbewegung gestört wird, was durch die Verwendung von zwei Gurtaufrollern 4 und 5 ermöglicht wird.

Das Gurtband 6 weist in dem ersten Abschnitt 13 eine Schussfadendichte von 10 bis 18 Schussfäden/cm, in dem zweiten Abschnitt 12 eine Schussfadendichte von ca. 6 bis 12 Schussfäden/cm und in den Übergangsabschnitten 14 eine in Richtung des ersten Abschnittes 13 ansteigende Schussfadendichte von 6 bis 18 Schussfäden/cm auf. Die Schussfadendichte ist jeweils in Richtung der Längserstreckung des Gurtbandes 6 angegeben.

Weiter ist das Gurtband 6 im Bereich der zweiten Abschnitte 12 und im Bereich der Übergangsabschnitte 14 jeweils mit einer 2/2 Bindung und im Bereich des ersten Abschnittes 13 mit einer 1/1 und/oder einer 2/2 Bindung gewebt. Wie in der unteren Darstellung der Fig. 2 und der Fig. 3 zu erkennen ist, ist das Gurtband 6 im Bereich des ersten Abschnittes 13 doppellagig mit zwei Lagen an Kettfäden 19, 20 und Schussfäden 18 gewebt, wobei beide Lagen und insbesondere die Schussfäden 18 in den Randbereichen jeweils durch zwei Bindungsfäden 17 in einer 1/1 Bindung miteinander verbunden sind, während die übrigen Kettfäden 19,20 sowohl in einer 2/2 als auch in einer 1/1 Bindung verwoben werden können. Dabei hat es sich als vorteilhaft herausgestellt, wenn nur die Bindungsfäden 17 in einer 1/1 Bindung und die Kettfäden in einer 2/2 Bindung verwoben sind. Der erste Abschnitt 13 ist damit als Hohlgewebe ausgebildet.

Der Vorteil der vorgeschlagenen Ausbildung des ersten Abschnittes 13 und der Übergangsabschnitte 14 ist darin zu sehen, dass das Gurtband 6 dadurch sowohl während des normalen Gebrauchs als auch unter Last faltenfrei und ohne sich in den Randbereichen zu verwölben an dem Insassen anliegt. Dabei sind die Länge der Übergangsabschnitte 14 und die ansteigende Schussfadendichte in den Übergangsabschnitten 14 von besonderer Bedeutung für eine möglichst gleichmäßige Lastverteilung. Außerdem ist das Webmuster der 1/1 und/oder 2/2 Bindung in dem Bereich des ersten Abschnittes 13 von besonderer Bedeutung, da hierdurch eine sehr dichte und hohe Anzahl von Bindungspunkten der Schussfäden 18, Kettfäden 19,20 und Bindungsfäden 17 erzielt werden kann.

Die Kettfäden 19,20 weisen eine Garnstärke von bevorzugt 830 bis 1670 dtex auf, während die Schussfäden 18 eine bevorzugte Garnstärke von 400 bis 1100 dtex und die Bindungsfäden 17 eine bevorzugte Garnstärke von 280 bis 550 dtex aufweisen. Dabei kann die Garnstärke der Bindungsfäden 17 in Abhängigkeit von der Garnstärke der Schussfäden 18 gewählt werden.

Ferner muss das Gurtband 6 mit Kettfäden 19,20 mit einer individuell veränderbaren bzw. unterschiedlichen Spannung für die unterschiedlichen Abschnitte 12,13 und 14 gewebt werden.

Wie in der mittleren Darstellung der Fig. 2 zu erkennen ist, sind die Kettfäden 19,20 des Gurtbandes 6 in drei Webbäumen I,II und III verwoben. Dabei weist der erste Webbaum III in dem zentralen Abschnitt 150 Kettfäden auf, während an den ersten Webbaum III zwei symmetrisch angeordnete und identisch ausgebildete Teilbündel oder Teilabschnitte eines zweiten Webbaumes II angrenzen, welche im Vergleich zu dem ersten Webbaum III eine geringere Anzahl von jeweils 75 Kettfäden aufweisen, so dass der zweite Webbaum II insgesamt in der Summe der zwei Teilbündel oder Teilabschnitte ebenfalls 150 Kettfäden 19 und 20 aufweist. An die Teilabschnitte des zweiten Webbaumes II grenzen außenseitig zwei weitere Teilabschnitte oder Teilbündel eines dritten Webbaumes I, welche jeweils 60 Kettfäden aufweisen, so dass der dritte Webbaum I insgesamt 120 Kettfäden 19,20 aufweist. Die Kettfäden 19,20 der unterschiedlichen Webbäume I, II und III können bevorzugt in unterschiedlichen Bindungen und/oder in unterschiedlichen Ausrichtungen mit den Schussfäden 18 verwoben werden, so dass das Gurtband 6 quer zu seiner Längserstreckung unterschiedliche Bindungen der Schussfäden 18 aufweist. Durch das Verweben der Kettfäden 19,20 in unterschiedlichen Webbäumen I, II und III kann das Gurtband 6 gezielt in dem ersten Abschnitt 13 mit einer derartigen Steifigkeit in Querrichtung versehen werden, dass sich das Gurtband 6 auch unter erhöhten Längskräften in den seitlichen Randabschnitten nicht seitlich verwölbt. Dabei ist das Weben in verschiedenen Webbäumen I, II und III ferner bevorzugt deshalb von Vorteil, da die höhere Zugkraft in dem schmaleren zweiten Abschnitt 12 dadurch gleichmäßiger auf den ersten Abschnitt 13 und umgekehrt übertragen wird. Unter dem Begriff der Webbäume I,II und III werden jeweils Gruppen von Kettfäden 19,20 verstanden, welche gemeinsam jeweils ihre Seitenausrichtung zu den Schussfäden 18 ändern und dadurch in einer einheitlichen Bindung mit den Schussfäden 18 verwoben werden.

Durch das Verweben der Kettfäden 19 und 20 in unterschiedlichen Webbäumen I,II und III können die Bindungen der Kettfäden 19 und 20 in unterschiedlichen Gruppen quer zu der Längserstreckung des Gurtbandes 6 unterschiedlich gewählt werden, wodurch wiederum unterschiedliche Steifigkeiten und dadurch bewusst ein bestimmtes Verformungsverhalten des Gurtbandes 6 erzielt oder verhindert werden kann.

Der Bindungsfaden 17 ist bevorzugt in einem getrennten, nicht dargestellten vierten Webbaum über die gesamte Quererstreckung des Gurtbandes 6 in einer 1/1 Bindung mit den Schussfäden 18 verwoben, so dass der Bindungsfaden 17 in einer anderen Bindung als die Kettfäden 19,20 der anderen Webbäume I,II und III verwoben ist und dadurch die beiden Lagen der Kettfäden 19 und 20 miteinander verbindet. Der vierte Webbaum der Bindungsfäden 18 überlagert die anderen Webbäume I,II und III praktisch über die Quererstreckung des Gurtbandes 6 und umfasst bevorzugt 70 bis 120 Fäden und besonders bevorzugt 100 Fäden.

Als Webbäume I, II und III werden Gruppierungen von Kettfäden 19,20 oder des Bindungsfadens 17 verstanden, welche zusammen als Gruppen in einer Bindung mit den Schussfäden 18 verwoben sind. Dabei kann die Bindung sowohl in dem Rhythmus unterschiedlich als auch in dem Rhythmus identisch, aber versetzt ausgebildet sein. Die Teilabschnitte oder Teilbündel der zweiten und dritten Webbäume II und I sind bevorzugt symmetrisch zu dem ersten Webbaum III angeordnet und aufgeteilt und in einer einheitlichen 2/2 oder 1/1 Bindung mit den Schussfäden 18, bevorzugt mit einer 2/2 Bindung, verwoben.

## Patentansprüche

1. Gurtband (6) für eine Sicherheitsgurteinrichtung (1) eines Kraftfahrzeuges, wobei
- das Gurtband (6) in einem ersten Abschnitt (13) in Bezug zu seiner Längsrichtung breiter als in einem zweiten Abschnitt (12) ausgebildet ist, **dadurch gekennzeichnet, dass**
- das Gurtband (6) in einem zwischen dem zweiten und dem ersten Abschnitt (12, 13) angeordneten Übergangsabschnitt (14) 6 bis 18 Schussfäden/cm mit einer in Richtung des ersten Abschnitts (13) zunehmenden Anzahl von Schussfäden/cm aufweist.

2. Gurtband (6) nach Anspruch 1, **dadurch gekennzeichnet, dass**
- der erste Abschnitt (13) eine Breite von 75 bis 100 mm aufweist.

3. Gurtband (6) nach Anspruch 1 oder 2, **dadurch gekennzeichnet, dass**
- der erste Abschnitt (13) eine Länge von 350 bis 600 mm aufweist.

4. Gurtband (6) nach einem der vorangegangenen Ansprüche,
**dadurch gekennzeichnet, dass**
- das Gurtband (6) in dem ersten Abschnitt (13) eine 1/1 und/oder 2/2 Bindung aufweist.

5. Gurtband (6) nach einem der vorangegangenen Ansprüche,
**dadurch gekennzeichnet, dass**
- das Gurtband (6) in dem ersten Abschnitt (13) 10 bis 18 Schussfäden/cm aufweist.

6. Gurtband (6) nach einem der vorangegangenen Ansprüche,
**dadurch gekennzeichnet, dass**
- das Gurtband (6) zwischen dem zweiten und dem ersten Abschnitt (12, 13) einen Übergangsabschnitt (14) mit einer in Richtung des ersten Abschnittes (13) zunehmenden Breite aufweist, welcher eine Länge von 100 bis 200 mm aufweist.

7. Gurtband (6) nach einem der vorangegangenen Ansprüche,
**dadurch gekennzeichnet, dass**
- das Gurtband (6) in dem ersten Abschnitt (13) in zwei übereinander angeordneten Lagen (15, 16) gewebt ist, und
- die beiden Lagen (15, 16) durch einen Bindungsfaden (17) miteinander verbunden sind.

8. Gurtband nach einem der vorangegangenen Ansprüche, **dadurch gekennzeichnet, dass**
- die Kettfäden (19, 20) des Gurtbandes (6) in wenigstens drei, vorzugsweise in vier Webbäumen (I, II, III) gewebt sind.

9. Gurtband nach Anspruch 8, **dadurch gekennzeichnet, dass**
- das Gurtband (6) in einem zentralen ersten Webbaum (III) mit einer ersten Anzahl an Kettfäden (19, 20), und
- in den an den zentralen ersten Webbaum (III) angrenzenden Teilabschnitten von zweiten und dritten Webbäumen (I, II) mit einer zweiten Anzahl von Kettfäden (19, 20) gewebt ist, welche kleiner als die erste Anzahl der Kettfäden (19, 20) in dem ersten Webbaum (III) ist.

10. Gurtband nach Anspruch 9, **dadurch gekennzeichnet, dass**
- die zweiten und dritten Webbäume (I, II) identisch ausgebildet und symmetrisch zu dem zentralen ersten Webbaum (III) angeordnet sind.

11. Gurtband nach einem der Ansprüche 9 oder 10, **dadurch gekennzeichnet, dass**
- das Gurtband (6) in dem ersten zentralen Webbaum (III) 140 bis 160, vorzugsweise 150 Kettfäden (19, 20) aufweist.

12. Gurtband nach einem der Ansprüche 9 bis 11, **dadurch gekennzeichnet, dass**
- das Gurtband (6) in den zweiten und dritten Webbäumen (I, II) 120 bis 150, vorzugsweise 135 Kettfäden (19, 20) aufweist.

13. Gurtband nach einem der Ansprüche 8 bis 12 und nach Anspruch 7, **dadurch gekennzeichnet, dass**
- der Bindungsfaden (17) in einem von den anderen Kettfäden (19,20) getrennten Webbaum gewebt ist.

14. Gurtband (6) nach einem der vorangegangenen Ansprüche,
**dadurch gekennzeichnet, dass**
- auf dem Gurtband (6) eine verschieblich geführte, in einem fahrzeugfest befestigbaren Gurtschloss (10) verriegelbare Gurtzunge (9) vorgesehen ist, welche
- das Gurtband (6) in einer verriegelten Stellung in einen die Brust eines Insassen kreuzenden Diagonalgurtabschnitt (7) und einen das Becken des Insassen kreuzenden Beckengurtabschnitt (8) unterteilt, und
- der erste Abschnitt (13) so bemessen und positioniert ist, dass er den Diagonalgurtabschnitt (13) oder einen Teil des Diagonalgurtabschnittes (13) bildet.

15. Sicherheitsgurteinrichtung (1) mit
- einem ersten Gurtaufroller (4), und
- mit einem ersten Ende auf dem, ersten Gurtaufroller (4) aufwickelbaren Gurtband (6),
**dadurch gekennzeichnet, dass**
- das Gurtband (6) nach einem der Ansprüche 1 bis 14 ausgebildet ist, und
- ein zweiter Gurtaufroller (5) vorgesehen ist, auf dem das Gurtband (6) mit einem zweiten Ende aufwickelbar ist.

## Claims

1. Belt strap (6) for a safety belt mechanism (1) of a motor vehicle, wherein
- the belt strap (6) is formed wider in a first section (13) in relation to its longitudinal direction than in a second section (12), **characterised in that**
- in a transition region (14) arranged between the second and the first section (12, 13), the belt strap (6) has 6 to 18 picks/cm with an increasing number of picks/cm in the direction of the first section (13).

2. Belt strap (6) according to claim 1, **characterised in that**
- the first section (13) has a width of 75 to 100 mm.

3. Belt strap (6) according to claim 1 or 2, **characterised in that**
- the first section (13) has a length of 350 to 600 mm.

4. Belt strap (6) according to any one of the preceding claims, **characterised in that**
- the belt strap (6) in the first section (13) has a 1/1 and/or 2/2 weave.

5. Belt strap (6) according to any one of the preceding claims, **characterised in that**
- the belt strap (6) in the first section (13) has 10 to 18 picks/cm.

6. Belt strap (6) according to any one of the preceding claims, **characterised in that**
- the belt strap (6) has a transition section (14) between the second and the first section (12, 13) with a width increasing in the direction of the first section (13), which transition section has a length of 100 to 200 mm.

7. Belt strap (6) according to any one of the preceding claims, **characterised in that**
- the belt strap (6) in the first section (13) is woven in two layers (15, 16) arranged over one another, and
- the two layers (15, 16) are connected to one another by a weave thread (17).

8. Belt strap according to any one of the preceding claims, **characterised in that**
- the warp threads (19, 20) of the belt strap (6) are woven in at least three, preferably in four warp beams (I, II, III).

9. Belt strap according to claim 8, **characterised in that**
- the belt strap (6) is woven in a central first warp beam (III) with a first number of warp threads (19, 20), and
- is woven in the partial sections of second and third warp beams (I, II) adjoining the central first warp beam (III) with a second number of warp threads (19, 20), which is smaller than the first number of warp threads (19, 20) in the first warp beam (III).

10. Belt strap according to claim 9, **characterised in that**
- the second and third warp beams (I, II) are formed identically and are arranged symmetrically to the central first warp beam (III).

11. Belt strap according to one of claims 9 or 10, **characterised in that**
- the belt strap (6) in the first central warp beam (III) has 140 to 160, preferably 150 warp beams (19, 20).

12. Belt strap according to any one of claims 9 to 11, **characterised in that**
- the belt strap (6) in the second and third warp beams (I, II) has 120 to 150, preferably 135 warp beams (19, 20).

13. Belt strap according to any one of claims 8 to 12 and according to claim 7, **characterised in that**
- the weave thread (17) is woven in a warp beam separate from the other warp threads (19, 20).

14. Belt strap (6) according to any one of the preceding claims, **characterised in that**
- on the belt strap (6), a displaceably guided belt tongue (9) is provided which can be locked in a belt lock (10) attachable fixedly to the vehicle and which
- divides the belt strap (6) in a locked position into a diagonal belt section (7) crossing the chest of a passenger and a lap belt section (8) crossing the lap of the passenger, and
- the first section (13) is dimensioned and positioned so that it forms the diagonal belt section (13) or a portion of the diagonal belt section (13).

15. Safety belt device (1) with
- a first belt retractor (4), and
- with a belt strap (6) that can be wound by a first end on the first belt retractor (4),
**characterised by that**
- the belt strap (6) is formed according to any one of claims 1 to 14, and
- a second belt retractor (5) is provided, on which the belt strap (6) can be wound by a second end.

## Revendications

1. Sangle de ceinture (6) pour dispositif de ceinture de sécurité (1) de véhicule automobile,
- ladite sangle de ceinture (6) présentant, dans le sens de la longueur, un premier segment (13) conçu plus large qu'un deuxième segment (12) ; **caractérisée en ce que**
- la sangle de ceinture (6) présente, dans un segment de transition (14) situé entre le deuxième et le premier segment (12, 13), 6 à 18 fils de trame par centimètre, le nombre de fils de trame par centimètre augmentant en s'approchant du premier segment (13).

2. Sangle de ceinture (6) selon la revendication 1, **caractérisée en ce que**
- le premier segment (13) présente une largeur de 75 à 100 mm.

3. Sangle de ceinture (6) selon la revendication 1 ou 2, **caractérisée en ce que**
- le premier segment (13) présente une longueur de 350 à 600 mm.

4. Sangle de ceinture (6) selon l'une des revendications précédentes, **caractérisée en ce que**
- la sangle de ceinture (6) présente une armure 1/1 et/ou 2/2 dans le premier segment (13).

5. Sangle de ceinture (6) selon l'une des revendications précédentes, **caractérisée en ce que**
- la sangle de ceinture (6) présente 10 à 18 fils de trame par centimètre dans le premier segment (13).

6. Sangle de ceinture (6) selon l'une des revendications précédentes, **caractérisée en ce que**
- la sangle de ceinture (6) présente, entre le deuxième et le premier segment (12, 13), un segment de transition (14) dont la largeur augmente en s'approchant du premier segment (13) et dont la longueur est de 100 à 200 mm.

7. Sangle de ceinture (6) selon l'une des revendications précédentes, **caractérisée en ce que**
- la sangle de ceinture (6) est tissée, dans le premier segment (13), en deux couches (15, 16) superposées, et
- les deux couches (15, 16) sont reliées l'une à l'autre par un fil de liaison (17).

8. Sangle de ceinture selon l'une des revendications précédentes, **caractérisée en ce que**
- les fils de chaîne (19, 20) de la sangle de ceinture (6) sont tissés à partir d'au moins trois et de préférence quatre ensouples de tissage (I, II, III).

9. Sangle de ceinture selon la revendication 8, **caractérisée en ce que**
- la sangle de ceinture (6) est tissée à partir d'une première ensouple de tissage centrale (III), présentant un premier nombre de fils de chaîne (19, 20), et à partir des sections partielles de deuxième et troisième ensouples de tissage (I, II) bordant la première ensouple de tissage centrale (III) et présentant un deuxième nombre de fils de chaîne (19, 20) qui est inférieur au premier nombre de fils de chaîne (19, 20) contenus dans la première ensouple de tissage (III).

10. Sangle de ceinture selon la revendication 9, **caractérisée en ce que**
- les deuxième et troisième ensouples de tissage (I, II) sont de conception identique et sont disposées symétriquement par rapport à la première ensouple de tissage centrale (III).

11. Sangle de ceinture selon l'une des revendications 9 et 10, **caractérisée en ce que**
- la sangle de ceinture (6) présente, dans la première ensouple de tissage centrale (III), 140 à 160, et de préférence 150, fils de chaîne (19, 20).

12. Sangle de ceinture selon l'une des revendications 9 à 11, **caractérisée en ce que**
- la sangle de ceinture (6) présente, dans les deuxième et troisième ensouples de tissage (I, II), 120 à 150, et de préférence 135, fils de chaîne (19, 20).

13. Sangle de ceinture selon l'une des revendications 8 à 12 et selon la revendication 7, **caractérisée en ce que**
- le fil de liage (17) est tissé à partir d'une ensouple de tissage séparée des autres fils de chaîne (19, 20).

14. Sangle de ceinture (6) selon l'une des revendications précédentes, **caractérisée en ce que**
- il est prévu, sur la sangle de ceinture (6), une languette de ceinture (9) coulissante pouvant être verrouillée dans une boucle de ceinture (10) susceptible d'être montée à demeure dans le véhicule, laquelle languette de ceinture, une fois en position de verrouillage, subdivise la sangle de ceinture (6) en un segment diagonal de ceinture (7) en contact avec la poitrine d'un occupant du véhicule et en un segment de bassin (8) en contact avec le bassin de l'occupant du véhicule, et
- le premier segment (13) est dimensionné et positionné de manière à former le segment diagonal de ceinture (13) ou une partie du segment diagonal de ceinture (13).

15. Dispositif de ceinture de sécurité (1) comportant
- un premier enrouleur de ceinture (4), et
- une sangle de ceinture (6) susceptible d'être enroulée par une première extrémité sur le premier enrouleur de ceinture (4),
**caractérisé en ce que**
- la sangle de ceinture (6) est conçue selon l'une des revendications 1 à 14, et
- il est prévu un deuxième enrouleur de ceinture (5) sur lequel la sangle de ceinture (6) est susceptible de s'enrouler par une deuxième extrémité.
